Europäisches Patentamt

European Patent Office

Office européen des brevets

(19)

(11) Publication number: **0 177 203**
A2

# (12) EUROPEAN PATENT APPLICATION

(21) Application number: 85306394.9

(22) Date of filing: 09.09.85

(51) Int. Cl.⁴: **G 01 S 1/20**
G 01 S 1/24, G 01 S 1/30

(30) Priority: 28.09.84 GB 8424591

(43) Date of publication of application:
09.04.86 Bulletin 86/15

(84) Designated Contracting States:
CH DE FR GB IT LI NL

(71) Applicant: DECCA LIMITED
Western Road
Bracknell Berkshire RG12 1RG(GB)

(72) Inventor: Hazeltine, Stepen Gregory
2 Lansdown House 85 Surbiton Road
Kingston on Thames Surrey KP1 2HW(GB)

(74) Representative: Horton, Andrew Robert Grant et al,
BOULT, WADE & TENNANT 27 Furnival Street
London, EC4A 1PQ(GB)

(54) Radio navigation system.

(57) A phase or time-displacement radionavigation system comprises a terrestrial station (8), satellite stations (10,11) and a mobile receiver (9) which compares signals from the terrestrial station and each satellite to determine respective position lines defining a position fix.

FIG.5.

## "RADIO NAVIGATION SYSTEM"

This invention relates to a form of navigation by the use of radio signals from satellites and from terrestrial stations. A considerable advantage of this system over one using purely terrestrial stations is that signals from two satellites can be combined with those from any one terrestrial station to produce a 2-D position fix. By contrast, a minimum of three terrestrial stations are required to cover an equivalent area in many purely terrestrial systems. As suitable signals from the satellites can cover a large number of "chains", each requiring only terrestrial station, the possible saving on terrestrial stations is large. Although the system is described using terrestrial stations from the Decca Navigator system, it should not be taken to be restricted solely to that system; for example, it may be possible to similarly use a combination of signals from satellites and the LORAN-C transmitters.

According to the present invention there is provided a radionavigation system wherein, at a receiver, range-difference measurements are made in response to signals received from a terrestrial station and a satellite so as to provide an indication of a position line passing through the location of the receiver. In practice the system may comprise at least one terrestrial station and at least one earth satellite, the receiver being arranged to make respective range-difference measurements in response to signals received from the terrestrial station and each satellite.

In a particular embodiment of the invention, the terrestrial station provides at least one signal and the or each satellite radiates a signal of defined modulation, the receiver being arranged to convert the modulation into a signal which can be compared with the signal from the terrestrial station to determine the position line.

The invention also provides a receiver for use in a system as defined in the foregoing and comprising means for receiving a signal from at least one terrestrial station, means for receiving modulated signals from at least one satellite, means for deriving the modulation therefrom, means for converting said modulation into a form where it can be compared with the signal from the terrestrial station, and means for performing the comparison to provide an indication of said position line.

Reference will be made hereinafter to the accompanying drawings, in which:

Figure 1 is an explanatory diagram illustrating a hyperbolic pattern;

Figure 2 is a diagram indicating the geometry of a system according to the invention;

Figure 3 illustrates an elliptical phase pattern;

Figure 4 illustrates one form of a receiver; and

Figure 5 illustrates schematically one form of a system according to the invention.

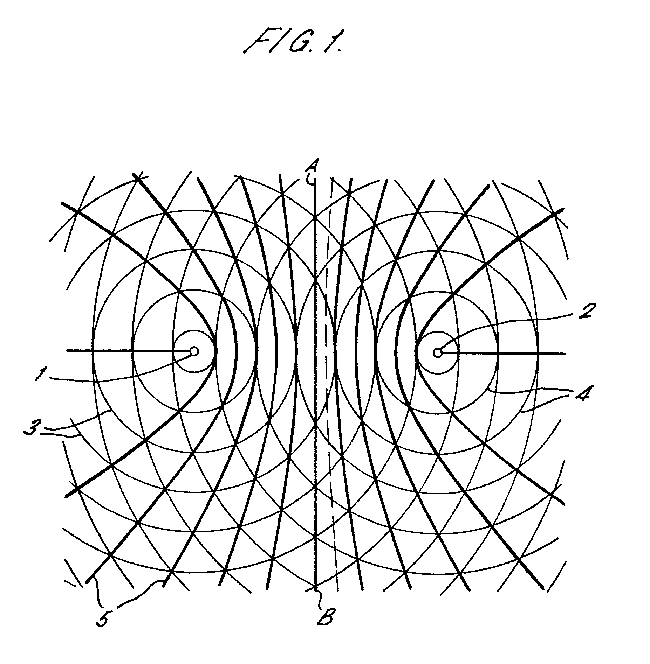

The principle of the operation of the Decca Navigator system is illustrated in Figure 1, in which two stations 1 and 2 emit spherical radio waves 3,4 at the same frequency. A receiver, not shown, makes a phase comparison between these two signals. If the signals are radiated in phase, the phase of the interference signal will be:

$$\Delta \phi = k \ (S + r_a - r_b)$$

Where $k = 2 \pi/\lambda$ where $\lambda$ is the common wavelength, S is the distance between the two ground stations and $r_a$ and $r_b$ are the distances of the receiver to the two transmitters.

The locus of points for which $\Delta$ $\phi$ is a constant is a set of hyperboloids with the line AB, bisecting the line between the stations, as an axis of symmetry. For a small area, the earth's surface may be approximated by a plane, and the position lines are approximately hyperbolae.

In practice the stations need not emit the same frequency, but may emit harmonically related frequencies which are suitably multiplied or divided in the receiver before phase comparison at a common frequency. This enables different pairs of stations to be used, producing different sets of hyperbolae whose intersection allows the receiver's position to be fixed. The normal minimum requirement for a two-dimensional position fix from a Decca Navigator "chain" of stations is three stations, i.e. a master station and two slave stations of which the transmissions are phase-locked to the transmissions from the master station.

However, the lanes (position lines) from this configuration intersect at a very acute angle in some areas, degrading the accuracy of the position fix. It is, therefore, more customary to use three slave stations, i.e. four stations in all, and to select the best pair of intersecting hyperbolae.

In this system, provided that sufficient signal to noise ratio were available at the receiver, skywave interference could be ignored; if there were no propagation anomalies (e.g. due to skywave or the conductivity of the ground-path), the system could be made to work for large separations between stations. Moreover, the lanes are hyperboloids of revolution about the axis AB, in Figure 1 and diverge. This divergence affects the precision available from the system and becomes increasingly important as the distance from the receiver to either point A or point B becomes large compared to the distance between the stations.

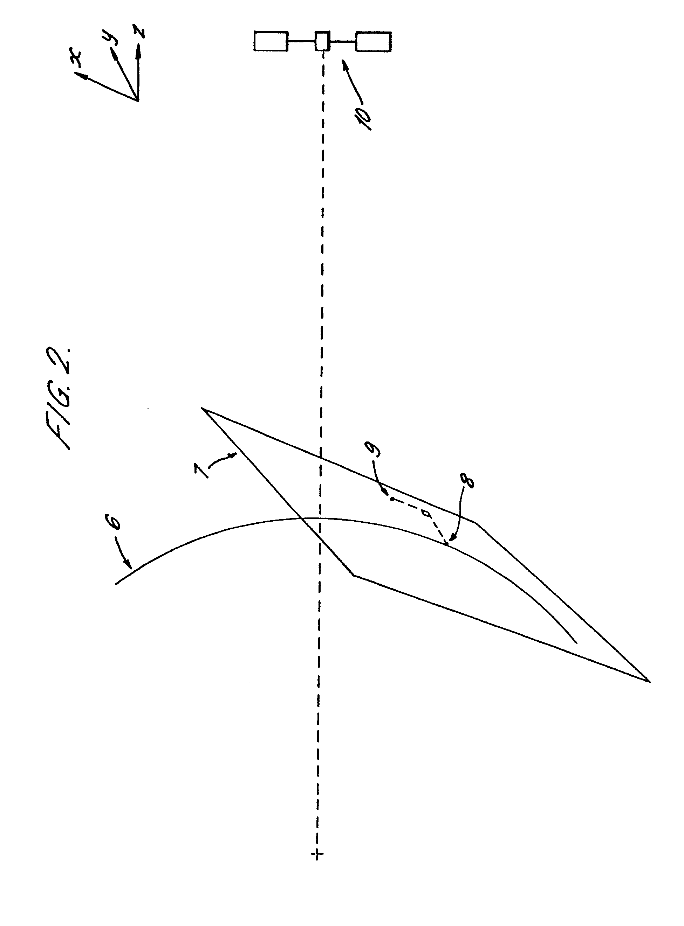

The present invention proposes that a navigation system comprises using one terrestrial station and two satellites in well defined orbits. The terrestrial station may be a Decca station and the satellites may be geostationary, although neither of these restrictions is necessary. The satellites emit radio waves from which can be derived a signal which is related to that emitted by the terrestrial system in such a way that a user can evaluate the difference in the distance $r_s$ between himself and the satellite and the distance $r$ between himself and the terrestrial station. In what follows is a derivation of the equation of lines of constant difference, which correspond to lines of constant phase difference in the Decca Navigator system, employing a system shown in Figure 2.

In Figure 2 is shown part of the earth's surface 6, a plane 7 tangential to the earth's surface and including a terrestrial station 8 and a mobile receiver 9, and a satellite 10. Cartesian coordinate axes x,y and z are defined such that the coordinates of the station 8 are [o,o,o], the coordinates of the receiver are [x,y,o] and the coordinates of the satellite are [U,o,V].

Let:

$$U^2 + V^2 = S^2,$$ where S is the distance from the satellite to the station 8, $V/U = \tan E$, where E is the angle of elevation of the satellite at the station 8 and also let $x = r \cos o$ and $y = r \sin o$ where $r = (x^2 + y^2)^{1/2}$ and $\theta = \arctan (y/x)$.

For simplicity it will be assumed that the satellite 10 and the station 8 emit signals of common wavelength. If the phase difference between the signals picked up by the receiver are $\Delta \phi$ then
$\Delta \phi = k[r_s-r]$ where $r_s$ is the distance from
receiver to satellite. Allowing the definitions
$D = [r_s-r]$ and $d = S-D$, then:

$$D = [(x-u)^2 + y^2 + v^2]^{1/2} - r$$

$$= [S^2 + r^2 - 2Sr \cos E \cos o]^{1/2}-r$$
$$= [(S^2 - D^2)/2D] \ (1/r)$$
$$= 1 + ( \ (S/D) \cos E) \cos e\ldots\ldots(1)$$

As $S < D$, $S/D \cos \underline{E} < 1$ when the satellite is
above the horizon. Eq. 1 is therefore the standard
form of an ellipse, with semi-latus rectum $1 =$
$(S^2 - D^2)/2D$ and eccentricity $e = (S/D) \cos E$.

For $d/S << 1$, we can make the approximations
$$e = \cos E,$$
and $[ (S^2 - D^2)]/2D = d$
and so $d/r = 1 + \cos E \cos e$

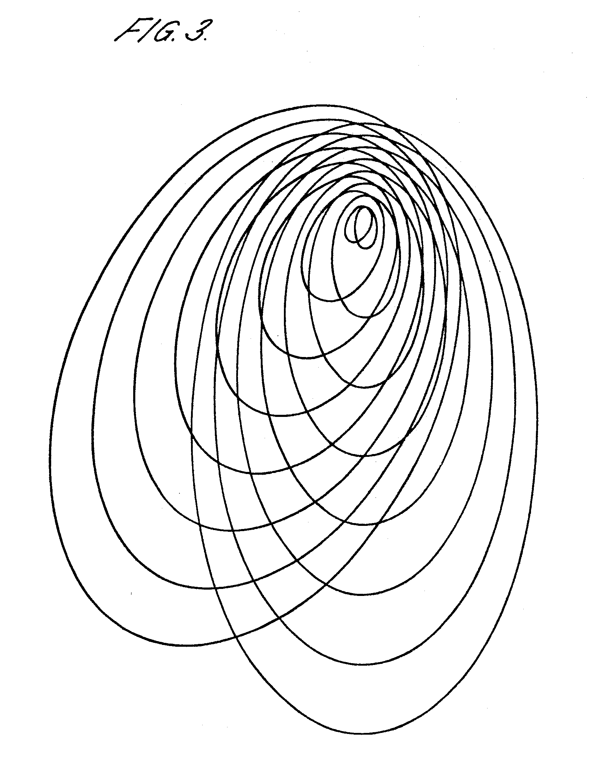

For increments of d of one free space
wavelength, this represents the loci of a set of
equally spaced ellipses. An example of the patterns
generated by two geostationary satellites and one
terrestrial station is shown in Figure 3.

The lane patterns described above will be
affected by satellite motion causing changes in the
range of the satellite to the receiver. This motion
will have to be accounted for in synchronizing the
satellites and the ground stations, and will need to
be measured and transmitted to the receiver at a
sufficient data rate and precision to enable
calculation of position to the required accuracy.
The precise way in which this information is obtained
and transmitted need not affect the performance of
the system, but purely by way of example, data could
be collected by suitably placed monitor stations
which compare their position with that derived from
use of the navigation system. Alternatively, if

- 6 -    0177203

satellite capacity is available, a two way ranging system could be used.   In both cases, data could be relayed back to the satellite control station to be conveyed to the users.   The predictability of the satellite motion can be used to ensure that only a low data rate is necessary.

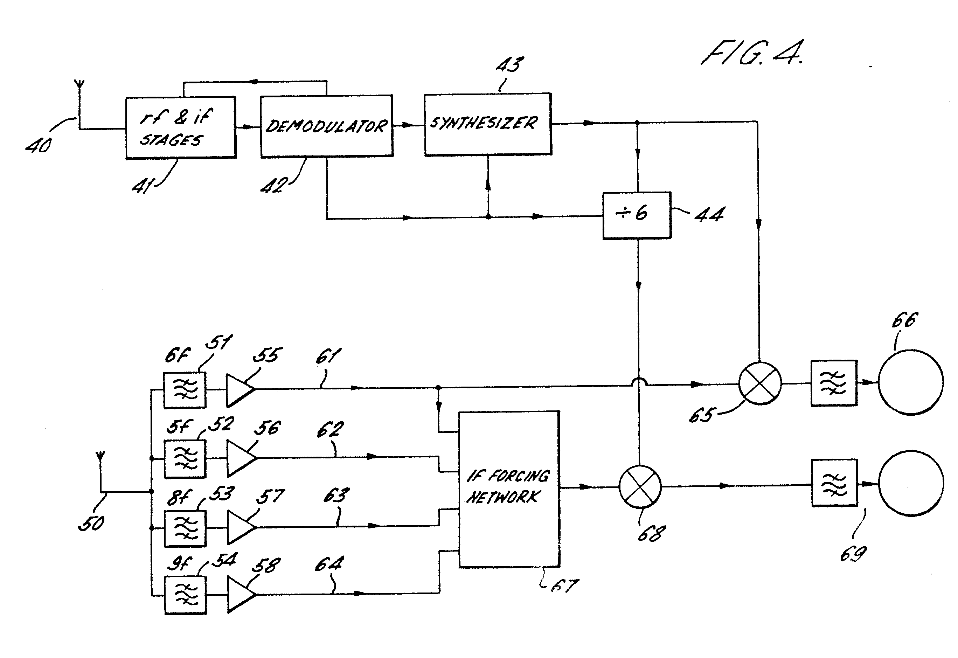

The operation of the system does not depend on any particular signal structure.   The example of a receiver shown in Figure 4 is based on the use of spread spectrum signals from the satellites and "Decca" signals (harmonically-related radio-frequency signals in fixed phase relation) from the terrestrial station.   The spread spectrum signals may be "suppressed carrier", or have a carrier provided to aid acquisition.   In this example, the code repetition rate of the spread spectrum signals is 5Hz. The signals radiated by the satellite are picked up by means of an L-band antenna 40, amplified by radio-frequency and intermediate-frequency stages 41.   Carrier and code synchronization may be acquired by means known per se.   At the output of the demodulator 42 is provided a signal at the chip rate.   This signal is used as the reference to a synthesizer 43 which by use of suitable known techniques produces a signal at the frequency of the Decca station (the master being used in this example).   This synthesizer is capable of being reset to a known phase (e.g. zero) on receipt of a reset pulse which occurs every 1/5 second from the CDMA demodulator.   This ensures correct synchronism of the received transmissions.   It will be understood that in a normal chain of "Decca" stations, the master and (three) slave stations normally radiate signals of 6f,5f,8f and 9f respectively, (where f is the associated fundamental frequency) except for interruption periods wherein all four frequencies are radiated by each station in turn. The so-called "multipulse" transmissions enable the effective phase of a signal at 1f to be reconstructed at a receiver for resolving ambiguities in the higher-frequency phase comparisons.

The output of the modulator is also divided in a divider 44 by, in this example, six to provide a signal at the aforementioned fundamental frequency.

The transmissions from the terrestrial station are received by antenna 50, filtered and amplified by respective filters and amplifiers 51 to 54 and 55 to 58 to provide (as available) signals at the frequencies 6f, 5f, 8f and 9f on lines 61 to 64. The 6f signal on line 61 is compared in phase in unit 65 with the signal at the same frequency from synthesizer 43, the output phase angle being indicated by a decometer 66. The multipulse signals are combined in a forcing network 67, yielding an output at 1f which is compared in phase with the output of divider 44 by a unit 68 to produce a lane identification signal, displayed by meter 69.

The system according to the invention may be used with other forms of phase or time-displacement navigation systems if desired. The signals from the terrestrial station may be non-continuous, as in Loran-C, and the satellite signal need not be a pseudo-random noise signal.

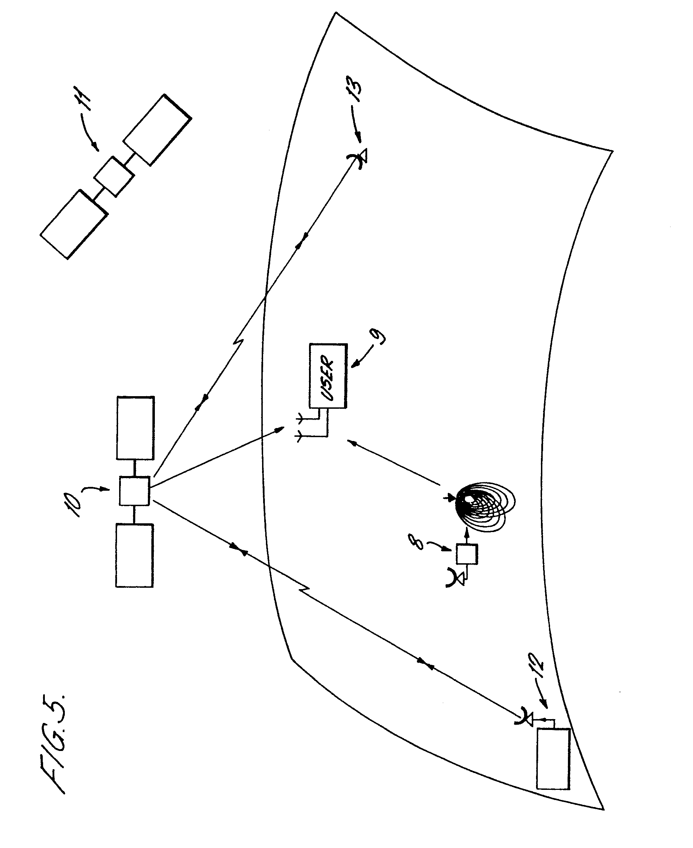

Figure 5 illustrates in schematic form the principal components of a system according to the invention. The system comprises the ground station 8, a mobile receiver 9 (as shown in Figure 4) and satellites 10 and 11. The synchronization of transmissions from the satellites is controlled by a satellite control station 12. Movement of the satellites is monitored by a station 13, which transmits via a satellite (10) information enabling the receiver 9 to compute ( in accordance with known practice) the positions of the satellites at the times when phase comparisons are made to determine the position of the receiver.

A considerable benefit of the present invention is that a service sector associated with a given station may be greatly extended using a satellite, preferably two satellites for range-difference measurements. The service sector associated with the satellites can be further extended by the provision of further ground transmitters sharing the same satellites. Moreover, additional satellites may be added such that at least two can serve an augmented service sector with a suitable set of ground transmitting stations.

CLAIMS:

1.     A radionavigation system wherein, at a receiver, range-difference measurements are made in response to signals received from a terrestrial station and a satellite so as to provide an indication of a position line passing through the location of the receiver.

2.     A radionavigation system according to claim 1, and comprising at least one terrestrial station and at least one earth satellite, the receiver being arranged to make respective range-difference measurements in response to signals received from the terrestrial station and each satellite.

3.     A system according to claim 1 or claim 2 in which the terrestrial station provides one signal and each satellite radiates a signal of defined modulation, the receiver being arranged to convert the modulation into a signal which can be compared with the signal from the terrestrial station to determine the position line.

4.     A receiver for use in a system according to claim 3 and comprising means for receiving a signal from at least one terrestrial station, means for receiving modulated signals from at least one satellite, means for deriving the modulation therefrom, means for converting said modulation into a form where it can be compared with the signal from the terrestrial station, and means for performing the comparison to provide an indication of said position line.

FIG. 1.

1/5

0177203

FIG.2.

FIG. 3.

FIG.4.

FIG.5.

USER

11 · 10 · 13 · 9 · 8 · 12